# EUROPÄISCHE PATENTSCHRIFT

(11) **EP 4 388 211 B1**
(45) Veröffentlichungstag und Bekanntmachung des Hinweises auf die Patenterteilung: **25.03.2026**
(21) Anmeldenummer: 22768352.1
(22) Anmeldetag: 19.08.2022
(51) Int. Cl.: F16C 19/36, F16C 35/063, F16C 33/76, B25J 17/02

(54) **AUSGANGSLAGERANORDNUNG FÜR EINEN GELENKANTRIEB, INSBESONDERE EINEN ROBOTERGELENKANTRIEB**
OUTPUT BEARING ARRANGEMENT FOR AN ARTICULATED DRIVE, ESPECIALLY A ROBOTIC ARTICULATED DRIVE
AGENCEMENT DE PALIERS DE SORTIE POUR UN ENTRAÎNEMENT ARTICULÉ, EN PARTICULIER POUR UN ENTRAÎNEMENT ARTICULÉ DE ROBOT

(30) Priorität: 20.08.2021 EP 21192350
(43) Veröffentlichungstag der Anmeldung: 26.06.2024
(73) Patentinhaber: Maxon International AG, 6072 Sachseln (CH)
(72) Erfinder: GÜNTHER, Fabian, 8180 Bülach (CH); WANDELER, Marco, 6072 Sachseln (CH)
(74) Vertreter: Grünecker Patent- und Rechtsanwälte PartG mbB
(86) Internationale Anmeldenummer: PCT/EP2022/073169
(87) Internationale Veröffentlichungsnummer: WO 2023/021180

(56) Entgegenhaltungen:
- DE-A1- 3 601 456
- US-A1- 2012 034 022

## Beschreibung

Die vorliegende Erfindung betrifft eine Ausgangslageranordnung für einen Gelenkantrieb, insbesondere einen Robotergelenkantrieb, umfassend eine Ausgangswelle, ein auf der Ausgangswelle angeordnetes Ausgangslager mit einem Innenring zur Lagerung der Ausgangswelle, eine Dichtung zur Abdichtung des Gelenkantriebs und ein abtriebsseitiges Gelenkelement, wobei das Gelenkelement mittels einer Verklemmvorrichtung axial mit der Ausgangswelle verklemmt ist und die Verklemmvorrichtung des Gelenkelements auch den Innenring des Ausgangslagers axial verklemmt.

In Gelenkantrieben von Robotergelenken, also beispielsweise eines Roboterarmes oder Roboterbeines, müssen Axialkräfte, Radialkräfte und Kippmomente durch eine Lagerung von einem Gelenkelement zum Nächsten übertragen werden. Gleichzeitig muss die Lagerung das freie Drehen sowie die Übertragung eines Torsionsmomentes zwischen den Gelenkelementen ermöglichen. Zudem muss zusätzlich das Eindringen von Staub und Wasser in das Gelenk zumindest bis zu einem gewissen Grad verhindert werden.

Aus dem Stand der Technik sind bereits Gelenke, insbesondere Robotergelenke und Lageranordnungen für die Gelenke bzw. Robotergelenke bekannt. So zeigt die KR 20170143396 A in Figur 1 ein Robotergelenk mit einem Lager und einer Dichtung, wobei die Dichtung auf einer Hülse angeordnet ist, welche den Lagerinnenring axial positioniert.

DE 102005035182 A1 zeigt in Figur 1 ein Planetengetriebe für ein Gelenk mit einem Lager 120B und eine Dichtung 170, wobei die Dichtung auf einem Kragen 168 angeordnet ist. Der Kragen positioniert den Lagerinnenring axial.

Die US 2012/034022 A1 beschreibt eine Roboterarmanordnung mit einem ersten Segment, einem zweiten Segment, einer erste Antriebsvorrichtung, einem ersten Übertragungsmechanismus, einer zweiten Antriebsvorrichtung und einem zweiten Übertragungsmechanismus. Das zweite Segment ist drehbar mit dem ersten Segment verbunden. Der zweite Übertragungsmechanismus umfasst ein erstes Kegelrad und ein zweites Kegelrad, das mit dem ersten Kegelrad kämmt. Eine Ausgangswelle ist mit dem zweiten Kegelrad verbunden und die Ausgangswelle kann sich um eine zweite Achse drehen. Die Ausgangswelle 28 ist mittels eines Lagers 81 gelagert und mit Schrauben mit dem zweiten Kegelrad 784 verbunden. Dabei ist auch der Innenring des Lagers 81 über die Ausgangswelle verklemmt. Neben dem Lager 81 ist eine Dichtung gezeigt.

Die DE 36 01 456 A1 offenbart einen mechanischen Gelenkmechanismus, insbesondere einen dreiachsigen Gelenkmechanismus, für einen Roboter. Der Gelenkmechanismus umfasst ein erstes Gehäuseteil, ein zweites Gehäuseteil und ein Werkzeugtragteil. Das Werkzeugtragteil ist mit Schrauben mit einem Kegelrad verbunden. Das Kegelrad und das Werkzeugtragteil sind mittels eines Lagers drehbar gelagert. Das Lager ist zwischen dem Werkzeugtragteil und dem Kegelrad angeordnet. Neben dem Lager ist eine Dichtung angeordnet, die eine Verunreinigung des Lagers verhindert.

Es ist die Aufgabe der vorliegenden Erfindung, eine Ausgangslageranordnung für einen Gelenkantrieb, insbesondere einen Robotergelenkantrieb, bereitzustellen, die die aus dem Stand der Technik bekannten Anordnungen verbessert und insbesondere einen kompakten Aufbau ermöglicht.

Die Aufgabe wird gelöst durch die Merkmale des unabhängigen Anspruchs 1.

Demnach ist bei einer erfindungsgemäßen Ausgangslageranordnung vorgesehen, dass in axialer Richtung zwischen dem Innenring des Ausgangslagers und dem Gelenkelement eine Distanzhülse angeordnet ist. Durch die erfindungsgemäße Ausgangslageranordnung wird ein sehr kompakter Aufbau ermöglicht. Durch die Wirkungen der Ausgangslager-Fixierung können im Gelenk zudem Radiallasten, Axiallasten, Kippmomente und Torsionsmomente mit einem einzelnen Lager zuverlässig übertragen werden. Bei dem Gelenkelement kann es sich insbesondere um ein Roboterarm, ein Roboterbein oder ein Glied eines Exoskelettes handeln. Eine axiale Kraft wird somit von dem abtriebsseitigen Gelenkelement über die Distanzhülse und den Lagerinnenring auf die Ausgangswelle übertragen. In einer Ausführung nicht Teil der Erfindung wäre es auch vorstellbar, dass die Distanzhülse Bestandteil des Gelenkelements ist

In einer besonders kompakten Ausführungsform kann vorgesehen sein, dass nur ein einzelnes Ausgangslager zur Lagerung der Ausgangswelle vorgesehen ist. In diesem Fall werden sowohl der Innenring als auch der Außenring des Ausgangslagers radial und axial geführt. Vorzugsweise wird ein Kreuzrollenlager, ein Vierpunktlager oder ein doppelreihiges Schrägkugellager als Ausgangslager eingesetzt. Der Innenring des Ausgangslagers ist bevorzugt in axialer Richtung zwischen dem Gelenkelement und der Ausgangswelle angeordnet. Dadurch wird die gewünschte axiale Fixierung des Innenrings erreicht.

Eine einfache Ausgestaltung kann dadurch erreicht werden, dass als Verklemmvorrichtung mindestens eine Schraube vorgesehen ist. Der Innenring des Ausgangslagers des Robotergelenks wird dann durch dieselbe(n) Schraube(n) axial geklemmt, die auch das Gelenkelement axial an die Ausgangswelle klemmen. Vorzugsweise erstrecken sich die Schrauben durch das Gelenkelement und sind mit der Ausgangswelle verschraubt.

Vorteilhafterweise ist vorgesehen, dass ein auftretendes Drehmoment vollständig mittels eines Reibschlusses über die Distanzhülse und den Innenring des Ausganglagers auf die Ausgangswelle übertragen wird.

In noch einer weiteren vorteilhaften Ausführungsform kann vorgesehen sein, dass die Dichtung ein auf der Distanzhülse angeordnetes, die Distanzhülse radial umschließendes Dichtungselement umfasst. Die Außenfläche der Distanzhülse kann dann als Lauffläche für das Dichtungselement ausgebildet werden. Vorzugsweise handelt es sich bei dem Dichtungselement um eine dynamische Dichtung. Durch diese Ausgestaltung kann die axiale Klemmung des Innenrings des Ausgangslagers mit der Abdichtung des Gelenks und der Torsionsübertragung zwischen den Gelenkelementen kompakt kombiniert werden.

Vorteilhafterweise kann vorgesehen sein, dass zwischen der Distanzhülse und der Ausgangswelle eine weiteres Dichtungsbauteil angeordnet ist. Hier kann eine statisches Dichtungsbauteil, beispielsweise ein O-Ring eingesetzt werden. Es wird eine einfache und sichere Ausgestaltung erreicht.

In einer vorteilhaften Ausführungsform kann vorgesehen sein, dass das Gelenkelement an der Ausgangswelle stirnseitig ausschließlich indirekt oder nur teilweise direkt anliegt.

In noch einer weiteren Ausführungsform kann vorgesehen sein, dass die Ausgangswelle an ihrer Stirnseite eine mittige Erhöhung aufweist, das Gelenkelement an der mittigen Erhöhung der Ausgangswelle und an der Distanzhülse anliegt und mindestens zwei Schrauben entlang des Umfangs der Ausgangswelle angeordnet sind. Die mittige Erhöhung ist vorzugsweise zylinderförmig und kann beispielsweise derart ausgebildet sein, dass die Stirnseite der Ausgangswelle an ihren Rändern, also kreisringförmig, leicht zurückversetzt ist, beispielsweise um 0,2 mm. Durch die Verschraubung des Gelenkelements mit der Ausgangswelle wird die Distanzhülse gegen das Ausgangslager gepresst und das Ausgangslager fixiert.

Eine gute Drehmomentübertragung und gleichmäßige Lastverteilung kann dadurch erreicht werden, dass ein auftretendes Drehmoment sowohl über die Distanzhülse als auch über die mittige Erhöhung der Ausgangswelle übertragen wird, wobei bevorzugterweise etwa 40-60% des auftretenden Drehmoments über die Distanzhülse und etwa 40-60% des auftretenden Drehmoments über die mittige Erhöhung der Ausgangswelle übertragen werden und besonders bevorzugterweise etwa 50% des auftretenden Drehmoments über die Distanzhülse und etwa 50% des auftretenden Drehmoments über die mittige Erhöhung der Ausgangswelle übertragen werden.

In einer alternativen Ausgestaltung kann vorgesehen sein, dass die Distanzhülse in axialer Richtung über eine Stirnseite der Ausgangswelle vorsteht, das Gelenkelement an der Distanzhülse anliegt und mindestens zwei Schrauben entlang des Umfangs der Ausgangswelle angeordnet sind. Das Gelenkelement liegt somit nur an der Distanzhülse an, eine Mittelabstützung im Zentrum des Gelenkelements fehlt. Somit kann sich das Gelenkelement wie ein Biegebalken zum Zentrum bzw. zur Längsachse der Ausgangswelle hindurchbiegen. Dadurch wird die Verbindung vorgespannt und die Gefahr eines Lösens der Verschraubung während des Betriebs des Gelenks verringert.

Die Gefahr eines Lösens der Verschraubung während des Betriebs des Gelenks kann dann noch weiter verringert werden, wenn die Distanzhülse in axialer Richtung über eine Stirnseite der Ausgangswelle vorsteht, das Gelenkelement an der Distanzhülse anliegt und mindestens eine Schraube im Zentrum des Gelenkelements angeordnet ist. Auch hier liegt das Gelenkelement nur an der Distanzhülse an. Dadurch wird das Gelenkelement zum Zentrum der Ausgangswelle. d.h. in Richtung zur Längsachse der Ausgangswelle hin, durchgebogen. Es entsteht ein noch längerer Biegebalken, welcher die Verbindung stärker vorspannt, wodurch die Gefahr eines Lösens der Verschraubung während des Betriebs weiter verringert wird.

Um eine sichere Befestigung der Distanzhülse auf der Ausgangswelle zu ermöglichen, kann ferner vorgesehen sein, dass die Distanzhülse zusätzlich auf die Ausgangswelle aufgepresst oder geklebt oder aufgeschraubt ist.

Eine stabile Ausgestaltung kann dadurch erreicht werden, dass die Distanzhülse aus Stahl ist.

Vorzugsweise ist das Dichtungselement aus Gummi ausgebildet. Da die Distanzhülse aus Stahl ist entsteht wenig Abrieb durch die Reibung an der Gummidichtung.

Eine sichere Abdichtung kann dadurch ermöglicht werden, das Dichtungselement mit zwei in axialer Richtung zueinander beabstandeten Auflagebereichen auf der Distanzhülse aufliegt. Vorzugsweise sind die Auflagebereiche als kreisringförmige Bereiche rund um den Umfang der Distanzhülse ausgebildet.

In noch einer weiteren vorteilhaften Ausführungsform kann vorgesehen sein, dass die Ausgangswelle aus Stahl ist. Auch hierdurch wird eine stabile Ausgestaltung ermöglicht.

Ausführungsbeispiele der vorliegenden Erfindung werden nachfolgend anhand von Zeichnungen näher erläutert.

Es zeigen:
- Figur 1:: Schnitt durch eine erfindungsgemäße Ausgangslageranordnung;
- Figur 2:: Ausgangslageranordnung aus Figur 1 ohne Gelenkelement;
- Figur 3:: weiteres Ausführungsbeispiel der erfindungsgemäßen Ausgangslageranordnung;
- Figur 4:: weiteres Ausführungsbeispiel der erfindungsgemäßen Ausgangslageranordnung; und
- Figur 5:: weiteres Ausführungsbeispiel der erfindungsgemäßen Ausgangslageranordnung.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

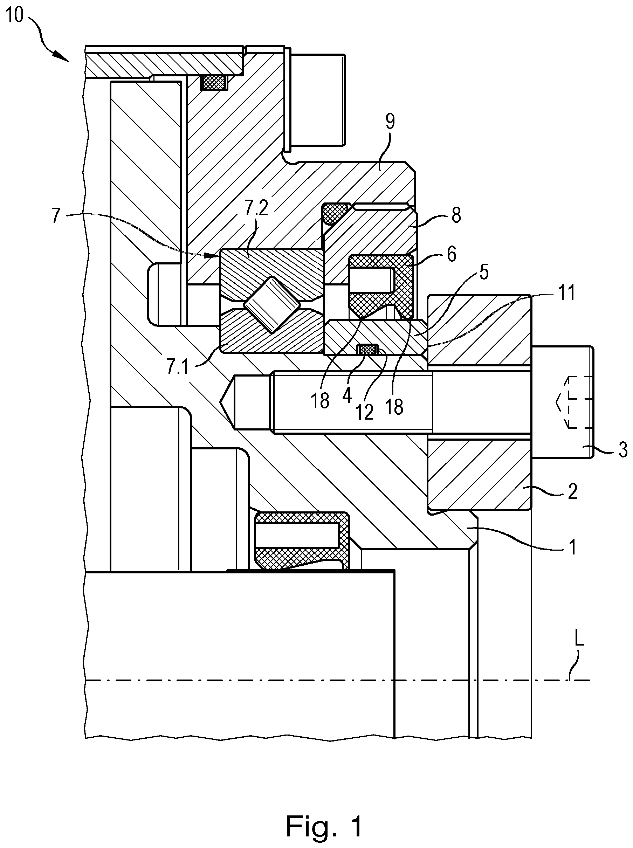

Figur 1 zeigt einen Schnitt durch eine erfindungsgemäße Ausgangslageranordnung 10. Die Ausgangslageranordnung 10 umfasst eine Ausgangswelle 1 und ein mit der Ausgangswelle 1 mittels einer Verklemmvorrichtung verklemmtes Gelenkelement 2. Die Verklemmvorrichtung ist vorzugsweise in Form von mindestens einer Schraube 3 ausgebildet. Das Gelenkelement 2 ist also mittels der mindestens einen Schraube 3 mit der Ausgangswelle 1 verschraubt. Die Ausgangswelle 1 ist mittels eines Ausgangslagers 7 drehbar gelagert. Vorzugsweise erfolgt die Lagerung der Ausgangswelle 1 mittels eines einzelnen Wälzlagers, beispielsweise eines Kreuzrollenlagers, eines Vierpunktlagers oder eines doppelreihigen Schrägkugellagers. Es müssen dann sowohl der Innenring 7.1 als auch der Außenring 7.2 des Ausgangslagers 7 radial und axial geführt werden. Dazu ist vorgesehen, dass axial zwischen dem Innenring 7.1 des Ausgangslagers 7 und dem Gelenkelement 2 eine Distanzhülse 5 angeordnet ist. Über die Distanzhülse 5 wird der Innenring 7.1 des Ausgangslagers 7 mittels des Gelenkelements 2 und der Schraube bzw. Schrauben 3 mit der Ausgangswelle 1 verspannt bzw. verklemmt. Somit ist eine axiale Kraft von dem abtriebsseitigen Gelenkelement 2 über die Distanzhülse 5 und den Lagerinnenring 7 auf die Ausgangswelle 1 übertragbar. Alternativ wäre es auch möglich, den Lagerinnenring direkt über das Gelenkelement mit der Ausgangswelle zu verspannen. In einer Alternativlösung, nicht Teil der Erfindung, wäre es auch denkbar, dass die Distanzhülse integral mit dem Gelenkelement ausgebildet ist. Auf der Distanzhülse 5 ist ein Dichtungselement 6 angeordnet, dass die Distanzhülse 5 radial umschließt und die Lagerschnittstelle abdichtet. Das Dichtungselement 6 weist vorzugsweise zwei Auflagebereiche 18 aus, mit denen es auf der Distanzhülse 5 aufliegt. Die Auflagebereiche 18 sind vorzugsweise als kreisringförmige Bereiche ausgebildet. Die Außenfläche der Distanzhülse 5 ist somit als Lauffläche für das dynamische Dichtungselement 6 ausgebildet. Die Distanzhülse 5 steht axial in Richtung des Gelenkelement 2 über die Stirnseite 11 der Ausgangswelle 1 hinaus. Dadurch liegt das Gelenkelement 2 sowohl an der Distanzhülse 5 als auch an zumindest einem Teilbereich der Ausgangswelle 1 an. Zwischen der Distanzhülse 5 und der Ausgangswelle 1 ist ein weiteres Dichtungsbauteil 4 angeordnet. Dazu ist in der Distanzhülse 5 eine Nut 12 vorgesehen, in der das weitere Dichtungsbauteil 4 angeordnet ist. Das weitere Dichtungsbauteil 4 ist vorzugsweise als O-Ring ausgebildet. Eine Torsion zwischen der Ausgangswelle 1 und dem Gelenkelement 2 wird zum einen über einen Reibschluss zwischen dem Gelenkelement 2 und der Ausgangswelle 1 sowie zum anderen über einen Reibschluss zwischen Gelenkelement 2 und Distanzhülse 5, Distanzhülse 5 und Innenring 7.1 des Ausgangslagers 7 und Innenring 7.1 des Ausgangslagers 7 und der Ausgangswelle 1 übertragen. Es können somit in vorteilhafter und kompakter Weise folgende Funktionen mit einer minimalen Anzahl von Bauteilen ausgeführt werden: Fixierung des Ausgangslagers 7, Abdichten des Gelenks bzw. der Ausgangslageranordnung 10 mittels einem dynamischen Dichtungselements 6 und Übertragung des Torsionsmoments. Durch die Wirkungen der Fixierung des Ausgangslagers 7 können im Gelenk Radiallasten, Axiallasten, Kippmomente und Torsionsmomente mit einem einzelnen Lager zuverlässig übertragen werden.

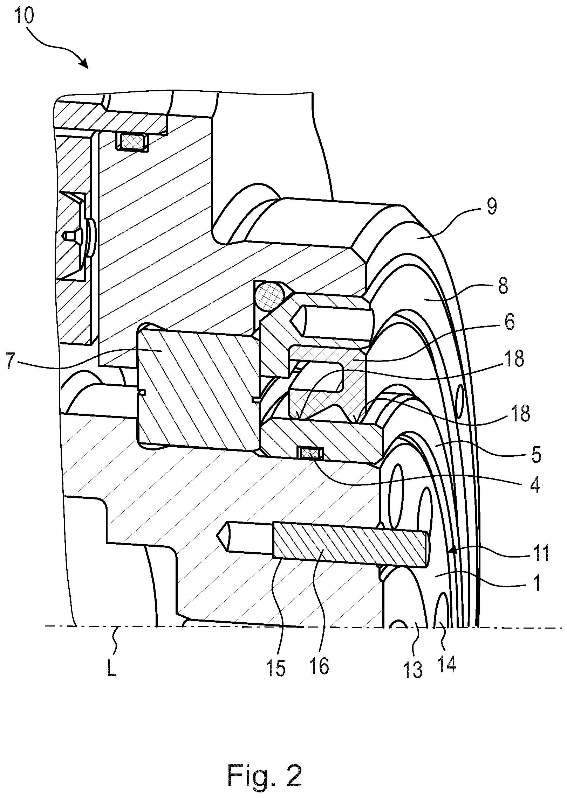

Figur 2 zeigt die Ausgangslageranordnung 10 aus Fig. 1 ohne das Gelenkelement. Die Ausgangswelle 1 weist an ihrer Stirnseite 11 eine mittige Erhöhung 13 auf. Vorzugsweise ist die mittige Erhöhung 13 zylindrisch und dadurch ausgebildet, dass die Ausgangswelle 1 entlang ihres Umfangs leicht zurückversetzt ausgebildet ist, beispielsweise um 0,2 mm. In diesem zurückversetzten Bereich sind in der Ausgangswelle 1 Bohrungen 14 ausgebildet. In diesen Bohrungen 14 werden die Schrauben aufgenommen, mit denen das Gelenkelement mit der Ausgangswelle 1 verschraubt ist. Zudem kann mindestens ein Loch 15 ausgehend von der Stirnseite 11 in der Ausgangswelle 1 ausgebildet sein. In diesem Loch 15 ist ein Stift 16 aufgenommen, der zur Fixierung des Gelenkelements an der Ausgangswelle 1 dient. Die Distanzhülse 5 ist vorzugsweise aus Stahl ausgebildet, die Ausgangswelle 1 vorzugsweise aus Aluminium. Die Distanzhülse 5 kann zusätzlich auf die Ausgangswelle 1 aufgepresst oder geklebt oder aufgeschraubt sein. Es wäre auch denkbar, dass die Distanzhülse und die Ausgangswelle aus dem gleichen Material, insbesondere aus Stahl bestehen. Das Dichtungselement 6 ist vorzugsweise aus Gummi und läuft auf der Distanzhülse 5. Wenn die Distanzhülse 5 aus Stahl ausgebildet ist entsteht durch die Reibung an der Gummidichtung weniger Abrieb als beispielsweise auf einem Aluminiumbauteil. Die Distanzhülse 5 steht in axialer Richtung, also in Richtung der Längsachse L Ausgangswelle 1, leicht über die Stirnseite 11 der Ausgangswelle 1 vor.

Das Ringelement 8 wird vorzugsweise über ein Feingewinde in den Lagerdeckel 9 eingedreht und fixiert den oberen Teil, also den Außenring 7.2 des Ausgangslagers 7.

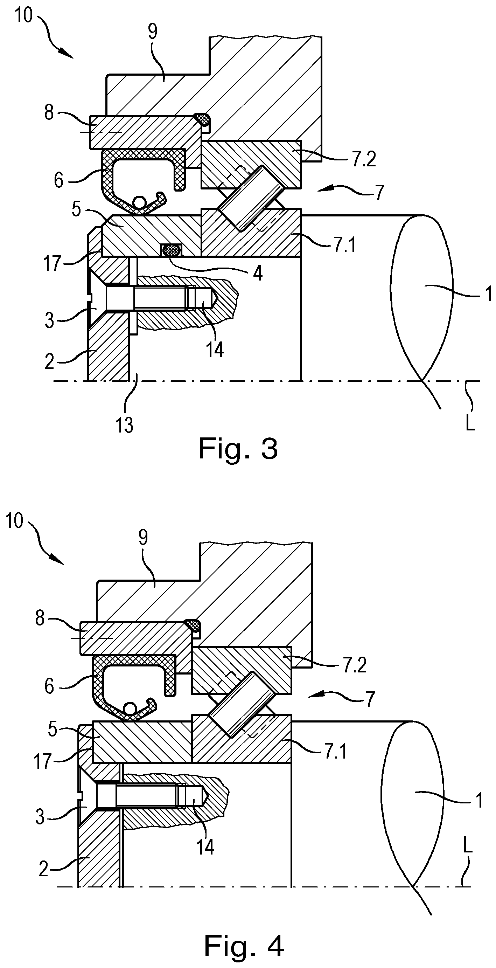

In den Figuren 3, 4 und 5 werden nun verschiedene Ausführungsformen zur Befestigung des Gelenkelements 2 an der Ausgangswelle 1 beschrieben.

In Figur 3 ist eine erste Ausführungsform zur Befestigung des Gelenkelements 2 an der Ausgangswelle 1 gezeigt. Die Ausgangswelle 1 weist die oben beschriebene mittige Erhöhung 13 auf, an der das Gelenkelement 2 mit einem mittigen Bereich anliegt. Zudem ragt die Distanzhülse 5 axial in Richtung der Längsachse L der Ausgangswelle 1 über die Stirnseite 11 der Ausgangswelle 1 hinaus. Das Gelenkelement 2 liegt daher auch an der Distanzhülse 5 an, beispielsweise mit einem äußeren Bereich. Hierzu kann in dem Distanzelement 2 eine Schulter 17 ausgebildet sein. Die Schrauben 3, welche das Gelenkelement 2 axial an die Ausgangswelle 1 klemmen sind entlang des Umfangs an der Ausgangswelle 1 angeordnet. In dieser Ausführungsform wird ein Teil eines auftretenden Drehmoments von dem Gelenkelement 2 auf die Distanzhülse 5 und ein anderer Teil des auftretenden Drehmoments von dem Gelenkelement 2 auf die mittige Erhöhung 13 der Ausgangswelle 1 übertragen. Bevorzugterweise kann vorgesehen sein, dass etwa 40-60% des auftretenden Drehmoments über die Distanzhülse 5 und etwa 40-60% des auftretenden Drehmoments über die mittige Erhöhung 13 der Ausgangswelle 1 übertragen werden und besonders bevorzugterweise etwa 50% des auftretenden Drehmoments über die Distanzhülse 5 und etwa 50% des auftretenden Drehmoments über die mittige Erhöhung 13 der Ausgangswelle 1 übertragen werden.

Figur 4 zeigt eine weitere Ausführungsform zur Befestigung des Gelenkelements 2 an der Ausgangswelle 1. In diesem Fall ist an der Stirnseite der Ausgangswelle 1 keine Erhöhung ausgebildet. Das Gelenkelement 2 liegt somit nur an der Distanzhülse 5 an. Eine Mittelabstützung im Zentrum des Gelenkelements 2 fehlt. Auch hier kann in dem Gelenkelement 2 eine Schulter 17 ausgebildet sein, mit dem das Gelenkelement 2 an der Distanzhülse 5 angelegt. Die Bohrungen 14 sind entlang des Umfangs in der Ausgangswelle 1 ausgebildet, sodass die Schrauben 3 ebenfalls entlang des Umfangs der Ausgangswelle 1 angeordnet sind. Somit kann sich das Gelenkelement 2 wie ein Biegebalken zum Zentrum der Ausgangswelle 1 hindurchbiegen. Durch diese Ausgestaltung des Gelenkelements 2 als Biegebalken wird die Schraubverbindung vorgespannt und die Gefahr, dass sich die Schraubverbindung während des Betriebs des Gelenks löst, wird verringert.

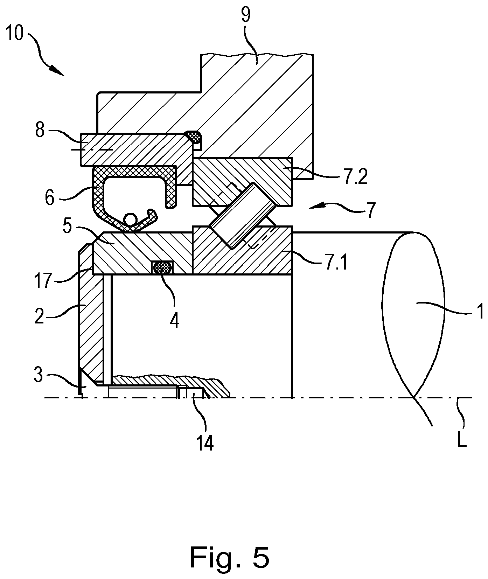

Figur 5 zeigt noch eine weitere Ausführungsform zur Befestigung des Gelenkelements 2 an der Ausgangswelle 1. Auch in dieser Ausführungsform weist die Ausgangswelle 1 keine mittige Erhöhung an der Stirnseite auf. Das Gelenkelement 2 liegt wiederum nur an der Distanzhülse 5 an. Dazu weist das Gelenkelement 2 eine Schulter 17 auf, mit der es an der Distanzhülse 5 anliegt. Mindestens eine Bohrung 14 ist mittig, beispielsweise auf der Längsachse L der Ausgangswelle 1 liegend in der Ausgangswelle 1 ausgebildet. Somit ist die Schraube 3 im Zentrum des Gelenkelement 2 angeordnet. Es kann auch vorgesehen sein, dass mehrere Schrauben im Zentrum des Gelenkelements angeordnet sind und somit auch mehrere Bohrungen im Zentrum der Ausgangswelle ausgebildet sind. In dieser Ausführungsform wird durch das Gelenkelement 2 ein gegenüber der Ausführungsform aus Fig. 4 längerer Biegebalken ausgebildet, welche die Schraubverbindung zwischen dem Gelenkelement 2 und der Ausgangswelle 1 stärker vorspannt, wodurch die Gefahr, dass sich die Schraubverbindung zwischen dem Gelenkelement 2 und der Ausgangswelle 1 während des Betriebs des Gelenkes löst, noch weiter verringert wird.

### Bezugszeichenliste

- 1: Ausgangswelle
- 2: Gelenkelement
- 3: Schraube
- 4: Dichtungsbauteil
- 5: Distanzhülse
- 6: Dichtungselement
- 7: Ausgangslager
- 7.1: Innenring Ausgangslager
- 7.2: Außenring Ausgangslager
- 8: Ringelement
- 9: Lagerdeckel
- 10: Ausgangslageranordnung
- 11: Stirnseite Ausgangswelle
- 12: Nut
- 13: mittige Erhöhung
- 14: Bohrung
- 15: Loch
- 16: Stift
- 17: Schulter
- 18: Auflagebereich
- L: Längsachse Ausgangswelle

## Patentansprüche

1. Ausgangslageranordnung (10) für einen Gelenkantrieb, insbesondere einen Robotergelenkantrieb, umfassend eine Ausgangswelle (1), ein auf der Ausgangswelle (1) angeordnetes Ausgangslager (7) mit einem Innenring (7.1) zur Lagerung der Ausgangswelle (1), eine Dichtung zur Abdichtung des Gelenkantriebs und ein abtriebsseitiges Gelenkelement (2), wobei das Gelenkelement (2) mittels einer Verklemmvorrichtung axial mit der Ausgangswelle (1) verklemmt ist und die Verklemmvorrichtung des Gelenkelements (2) auch den Innenring (7.1) des Ausgangslagers (7) axial verklemmt, **dadurch gekennzeichnet, dass** in axialer Richtung (L) zwischen dem Innenring (7.1) des Ausgangslagers (7) und dem Gelenkelement (2) eine Distanzhülse (5) angeordnet ist.

2. Ausgangslageranordnung (10) nach Anspruch 1, **dadurch gekennzeichnet, dass** ein einzelnes Ausgangslager (7) zur Lagerung der Ausgangswelle (1) vorgesehen ist.

3. Ausgangslageranordnung (10) nach Anspruch 1 oder 2, **dadurch gekennzeichnet, dass** als Verklemmvorrichtung mindestens eine Schraube (3) vorgesehen ist.

4. Ausgangslageranordnung (10) nach mindestens einem der Ansprüche 1 bis 3, **dadurch gekennzeichnet, dass** die Dichtung ein auf der Distanzhülse (5) angeordnetes, die Distanzhülse (5) radial umschließendes Dichtungselement (6) umfasst.

5. Ausgangslageranordnung (10) nach mindestens einem der Ansprüche 1 bis 4, **dadurch gekennzeichnet, dass** zwischen der Distanzhülse (5) und der Ausgangswelle (1) ein weiteres Dichtungsbauteil (4) angeordnet ist.

6. Ausgangslageranordnung (10) nach mindestens einem der Ansprüche 1 bis 5, **dadurch gekennzeichnet, dass** die Ausgangswelle (1) an ihrer Stirnseite (11) eine mittige Erhöhung (13) aufweist, das Gelenkelement (2) an der mittigen Erhöhung (13) der Ausgangswelle (1) und an der Distanzhülse (5) anliegt und mindestens zwei Schrauben (3) entlang des Umfangs der Ausgangswelle (1) angeordnet sind.

7. Ausgangslageranordnung (10) nach Anspruch 6, **dadurch gekennzeichnet, dass** ein auftretendes Drehmoment sowohl über die Distanzhülse (5) als auch über die mittige Erhöhung (13) der Ausgangswelle (1) übertragen wird, wobei bevorzugterweise etwa 40-60% des auftretenden Drehmoments über die Distanzhülse (5) und etwa 40-60% des auftretenden Drehmoments über die mittige Erhöhung (13) der Ausgangswelle (1) übertragen werden und besonders bevorzugterweise etwa 50% des auftretenden Drehmoments über die Distanzhülse (5) und etwa 50% des auftretenden Drehmoments über die mittige Erhöhung (13) der Ausgangswelle (1) übertragen werden.

8. Ausgangslageranordnung (10) nach mindestens einem der Ansprüche 1 bis 5, **dadurch gekennzeichnet, dass** die Distanzhülse (5) in axialer Richtung (L) über eine Stirnseite (11) der Ausgangswelle (1) vorsteht, das Gelenkelement (2) an der Distanzhülse (5) anliegt und mindestens zwei Schrauben (3) entlang des Umfangs der Ausgangswelle (1) angeordnet sind.

9. Ausgangslageranordnung (10) nach mindestens einem der Ansprüche 1 bis 5, **dadurch gekennzeichnet, dass** die Distanzhülse (5) in axialer Richtung (L) über eine Stirnseite (11) der Ausgangswelle (1) vorsteht, das Gelenkelement (2) an der Distanzhülse (5) anliegt und mindestens eine Schraube (3) im Zentrum des Gelenkelements (2) angeordnet ist.

10. Ausgangslageranordnung (10) nach mindestens einem der Ansprüche 1 bis 9, **dadurch gekennzeichnet, dass** die Distanzhülse (5) zusätzlich auf die Ausgangswelle (1) aufgepresst oder geklebt oder aufgeschraubt ist.

11. Ausgangslageranordnung (10) nach mindestens einem der Ansprüche 1 bis 10, **dadurch gekennzeichnet, dass** die Distanzhülse (5) aus Stahl ist.

12. Ausgangslageranordnung (10) nach mindestens einem der Ansprüche 4 bis 11, **dadurch gekennzeichnet, dass** das Dichtungselement (6) aus Gummi ist.

13. Ausgangslageranordnung (10) nach mindestens einem der Ansprüche 4 bis 12, **dadurch gekennzeichnet, dass** das Dichtungselement (6) mit zwei in axialer Richtung zueinander beabstandeten Auflagebereichen (18) auf der Distanzhülse (5) aufliegt.

14. Ausgangslageranordnung (10) nach mindestens einem der Ansprüche 1 bis 13, **dadurch gekennzeichnet, dass** die Ausgangswelle (1) aus Stahl ist.

## Claims

1. Output bearing arrangement (10) for an articulated drive, in particular a robot articulated drive, comprising an output shaft (1), an output bearing (7) arranged on the output shaft (1) with an inner ring (7.1) for supporting the output shaft (1), a seal for sealing the articulated drive and an output-side joint element (2), whereby the joint element (2) is axially clamped to the output shaft (1) by means of a clamping device and the clamping device of the joint element (2) also axially clamps the inner ring (7.1) of the output bearing (7),
**characterized in that** a spacer sleeve (5) is arranged in the axial direction (L) between the inner ring (7.1) of the output bearing (7) and the joint element (2).

2. Output bearing arrangement (10) according to claim 1, **characterized in that** a single output bearing (7) is provided for supporting the output shaft (1).

3. Output bearing arrangement (10) according to claim 1 or 2, **characterized in that** at least one screw (3) is provided as a clamping device.

4. Output bearing arrangement (10) according to at least one of claims 1 to 3, **characterized in that** the seal comprises a sealing element (6) arranged on the spacer sleeve (5) and radially enclosing the spacer sleeve (5).

5. Output bearing arrangement (10) according to at least one of claims 1 to 4, **characterized in that** a further sealing component (4) is arranged between the spacer sleeve (5) and the output shaft (1).

6. Output bearing arrangement (10) according to at least one of claims 1 to 5, **characterized in that** the output shaft (1) has a central elevation (13) on its end face (11), the joint element (2) rests on the central elevation (13) of the output shaft (1) and on the spacer sleeve (5), and at least two screws (3) are arranged along the circumference of the output shaft (1).

7. Output bearing arrangement (10) according to claim 6, **characterized in that** a torque occurring is transmitted both via the spacer sleeve (5) and via the central elevation (13) of the output shaft (1), wherein preferably about 40-60% of the torque occurring is transmitted via the spacer sleeve (5) and about 40-60% of the torque occurring is transmitted via the central elevation (13) of the output shaft (1), and particularly preferably about 50% of the torque occurring is transmitted via the spacer sleeve (5) and about 50% of the torque occurring is transmitted via the central elevation (13) of the output shaft (1).

8. Output bearing arrangement (10) according to at least one of claims 1 to 5, **characterized in that** the spacer sleeve (5) projects in axial direction (L) over an end face (11) of the output shaft (1), the joint element (2) rests against the spacer sleeve (5) and at least two screws (3) are arranged along the circumference of the output shaft (1).

9. Output bearing arrangement (10) according to at least one of claims 1 to 5, **characterized in that** the spacer sleeve (5) projects in axial direction (L) over an end face (11) of the output shaft (1), the joint element (2) rests against the spacer sleeve (5) and at least one screw (3) is arranged in the center of the joint element (2).

10. Output bearing arrangement (10) according to at least one of claims 1 to 9, **characterized in that** the spacer sleeve (5) is additionally pressed or glued or screwed onto the output shaft (1).

11. Output bearing arrangement (10) according to at least one of claims 1 to 10, **characterized in that** the spacer sleeve (5) is made of steel.

12. Output bearing arrangement (10) according to at least one of claims 4 to 11, **characterized in that** the sealing element (6) is made of rubber.

13. Output bearing arrangement (10) according to at least one of claims 4 to 12, **characterized in that** the sealing element (6) rests on the spacer sleeve (5) with two axially spaced support areas (18).

14. Output bearing arrangement (10) according to at least one of claims 1 to 13, **characterized in that** the output shaft (1) is made of steel.

## Revendications

1. Dispositif de palier de sortie (10) pour un entraînement articulé, notamment un entraînement articulé de robot, comprenant un arbre de sortie (1), un palier de sortie (7) monté sur l'arbre de sortie (1) avec une bague intérieure (7.1) supportant l'arbre de sortie (1), un joint d'étanchéité pour l'entraînement articulé et un élément de joint côté sortie (2), cet élément de joint (2) étant fixé axialement à l'arbre de sortie (1) au moyen d'un dispositif de serrage, ce dispositif de serrage de l'élément de joint (2) serrant également axialement la bague intérieure (7.1) du palier de sortie (7),
**caractérisé en ce que** une entretoise (5) est disposée axialement (L) entre la bague intérieure (7.1) du palier de sortie (7) et l'élément de joint (2).

2. Dispositif de palier de sortie (10) selon la revendication 1, **caractérisé en ce que** un seul palier de sortie (7) est prévu pour supporter l'arbre de sortie (1).

3. Dispositif de palier de sortie (10) selon la revendication 1 ou 2, **caractérisé en ce qu'**au moins une vis (3) est prévue comme dispositif de serrage.

4. Dispositif de palier de sortie (10) selon au moins une des revendications 1 à 3, **caractérisé en ce que** le joint comprend un élément d'étanchéité (6) disposé sur l'entretoise (5) et entourant radialement l'entretoise (5).

5. Dispositif de palier de sortie (10) selon au moins une des revendications 1 à 4, **caractérisé en ce qu'**un composant d'étanchéité supplémentaire (4) est disposé entre l'entretoise (5) et l'arbre de sortie (1).

6. Dispositif de palier de sortie (10) selon au moins une des revendications 1 à 5, **caractérisé en ce que** l'arbre de sortie (1) présente une élévation centrale (13) sur sa face d'extrémité (11), l'élément de joint (2) repose sur l'élévation centrale (13) de l'arbre de sortie (1) et sur l'entretoise (5), et au moins deux vis (3) sont disposées le long de la circonférence de l'arbre de sortie (1).

7. Dispositif de palier de sortie (10) selon la revendication 6, **caractérisé en ce que** un couple est transmis à la fois par l'intermédiaire de l'entretoise (5) et par l'élévation centrale (13) de l'arbre de sortie (1), de préférence environ 40 à 60 % du couple étant transmis par l'entretoise (5) et environ 40 à 60 % du couple étant transmis par l'élévation centrale (13) de l'arbre de sortie (1), et plus particulièrement de préférence environ 50 % du couple étant transmis par l'entretoise (5) et environ 50 % du couple étant transmis par l'élévation centrale (13) de l'arbre de sortie (1).

8. Dispositif de palier de sortie (10) selon au moins une des revendications 1 à 5, **caractérisé en ce que** l'entretoise (5) fait saillie dans la direction axiale (L) sur une face d'extrémité (11) de l'arbre de sortie (1), l'élément de joint (2) repose contre l'entretoise (5) et au moins deux vis (3) sont disposées le long de la circonférence de l'arbre de sortie (1).

9. Dispositif de palier de sortie (10) selon au moins une des revendications 1 à 5, **caractérisé en ce que** le l'entretoise(5) fait saillie dans la direction axiale (L) sur une face d'extrémité (11) de l'arbre de sortie (1), l'élément de joint (2) repose contre l'entretoise (5) et au moins une vis (3) est disposée au centre de l'élément de joint (2).

10. Dispositif de palier de sortie (10) selon au moins une des revendications 1 à 9, **caractérisé en ce que** l'entretoise (5) est en outre pressé, collé ou vissé sur l'arbre de sortie (1).

11. Dispositif de palier de sortie (10) selon au moins une des revendications 1 à 10, **caractérisé en ce que** l'entretoise (5) est réalisée en acier.

12. Dispositif de palier de sortie (10) selon au moins une des revendications 4 à 11, **caractérisé en ce que** l'élément d'étanchéité (6) est réalisé en caoutchouc.

13. Dispositif de palier de sortie (10) selon au moins une des revendications 4 à 12, **caractérisé en ce que** l'élément d'étanchéité (6) repose sur l'entretoise (5) avec deux zones de support espacées axialement (18).

14. Dispositif de palier de sortie (10) selon au moins une des revendications 1 à 13, **caractérisé en ce que** l'arbre de sortie (1) est réalisé en acier.
